(19) Europäisches Patentamt / European Patent Office / Office européen des brevets

(11) **EP 4 761 078 A1**

(12) **EUROPEAN PATENT APPLICATION**
published in accordance with Art. 153(4) EPC

(43) Date of publication:
**17.06.2026 Bulletin 2026/25**

(21) Application number: **24851553.8**

(22) Date of filing: **17.07.2024**

(51) International Patent Classification (IPC):
**H02K 19/36** (2006.01)    **H02K 19/28** (2006.01)

(52) Cooperative Patent Classification (CPC):
**H02K 19/28; H02K 19/36**

(86) International application number:
**PCT/JP2024/025628**

(87) International publication number:
**WO 2025/033124 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 JP 2023129451**

(71) Applicant: **DENSO CORPORATION**
**Kariya-city, Aichi 448-8661 (JP)**

(72) Inventor: **YOSHIMURA, Masataka**
**Kariya-city, Aichi 4488661 (JP)**

(74) Representative: **Kuhnen & Wacker**
**Patent- und Rechtsanwaltsbüro PartG mbB**
**Prinz-Ludwig-Straße 40 A**
**85354 Freising (DE)**

(54) **WINDING-FIELD-TYPE ROTARY ELECTRICAL MACHINE**

(57)    A rotary electric machine (40) is provided with a stator (50) having a stator winding (52); a rotor (60) having a rotor core (61) including a main pole part (62) provided at each of magnetic poles arranged in a circumferential direction, protruding in a radial direction, and a field winding (70) wound around the main pole part; and a rotary shaft (32) integrated with the rotor core, high frequency current flowing through the stator winding to induce a field current through the field winding. The rotary shaft is made of ferromagnetic material. The rotary electric machine is further provided with an axial winding (151) wound around the rotary shaft, being energized by the field current flowing through the field winding; and a magnetic flux detecting part (152) provided at an axial end of the rotary shaft, detecting a magnetic flux produced when energizing the axial winding.

FIG.10

EP 4 761 078 A1

**Description**

[Cross-Reference of Related Applications]

The present application is based on Japanese Application No. 2023-129451 filed on August 8, 2023, the content of which is incorporated herein by reference.

[Technical Field]

The present disclosure of the specification relates to a field-winding type rotary electric machine.

[Description of the Related Art]

According to a field-winding type rotary electric machine, a field winding is wound around respective main pole parts (magnetic protrusions) of the rotor core, and a magnetic pole is formed at each main pole part when energizing the field winding. Further, for the field winding type rotary electric machine having a brush-less structure, a technique for detecting a field current of the rotor is known. For example, according to a technique disclosed by PTL1, a q-axis winding is provided with which a q-axis component of a gap magnetic flux in an AC exciter is detected to output a voltage waveform. In this technique, when testing the AC exciter as a unit test, a proportional coefficient is calculated between the DC output current flowing through the AC exciter and the voltage level of the voltage waveform outputted by the q-axis winding, and holds the proportional coefficient as a reference calibration value. Then, when the brushless synchronous machine is operating, the voltage level of the voltage waveform of the q-axis winding output voltage and the reference calibration value are multiplied to acquire the field current.

[Citation List]

[Patent Literature]

[PTL1] JP-H-10-309100

[Summary of the Invention]

According to the technique of the above-described PTL1, a linearity of the voltage waveform of the q-axis winding with respect to the field current is utilized, and the reference calibration value acquired in advance and the voltage level of the voltage outputted by the q-axis winding are multiplied, thereby estimating the field current. That is, the field current is indirectly acquired by using the voltage waveform of the q-axis winding. In this case, an algorithm of the above-described estimation may cause an increase in the processing load of the control apparatus (i.e. microprocessor). Note that a surge voltage may be required to be handled, according to the above-described technique.

The present disclosure has been achieved in light of the above-described circumstances and the object thereof is to provide a field-winding type rotary electric machine that appropriately detects magnetic flux produced depending on a field current and being capable of estimating an amount of field current.

The present disclosure provides a field winding type rotary electric machine including: a stator having a stator winding; a rotor having a rotor core including a main pole part provided at each of magnetic poles arranged in a circumferential direction, protruding in a radial direction, and a field winding wound around the main pole part; and a rotary shaft integrated with the rotor core, high frequency current flowing through the stator winding to induce a field current through the field winding, wherein the rotary shaft is made of ferromagnetic material; the field winding type rotary electric machine further including: an axial winding wound around the rotary shaft, being energized by the field current flowing through the field winding; and a magnetic flux detecting part provided at an axial end of the rotary shaft, detecting a magnetic flux produced when energizing the axial winding.

According to the field winding type rotary electric machine thus configured, with a high frequency current flowing through the stator winding, a field current is induced at the field winding. In this case, an axial winding energized by the field current flowing through the field winding us wound around the rotary shaft made of ferromagnetic material, whereby a magnetic flux is produced in the axial line direction of the rotary shaft. Then, the magnetic flux detecting part provided at an axial end of the rotary shaft detects a magnetic flux produced when energizing the axial winding. According to the present configuration, an amount of magnetic flux produced by field current can be directly detected. As a result, an amount of magnetic flux produced depending on the field current can be appropriately detected and an amount of field current can be estimated.

[Brief Description of the Drawings]

The above-described objects and other objects, features and advantages of the present disclosure will be clarified further by the following detailed description with reference to the accompanying drawings. The drawings are:

Fig.1 is an overall configuration showing a control system of a rotary electric machine;
Fig.2 is a diagram showing an inverter and a peripheral configuration;
Fig.3 is a diagram showing a lateral cross-section of a rotor and a stator;
Fig.4 is a diagram showing an electrical circuit included in the rotor;
Fig.5 is a diagram showing a perspective view of an overall configuration of the rotor;
Fig.6 is a diagram showing an exploded perspective view of the rotor;

Fig.7 is a diagram showing a vertical cross-section of the rotor;

Fig.8 is a diagram showing a perspective view of a winding unit disassembled in a rotor main part;

Fig.9 is a diagram showing a diagram showing a lateral cross-section of the rotor main part;

Fig.10 is a diagram showing a vertical cross-section in which a configuration of the rotary electric machine is simply illustrated;

Fig.11 is an electric circuit diagram showing a connection point of axial windings in a resonance circuit of the rotor;

Fig.12 is a diagram showing a perspective view of a configuration related to a connection of a coil body in respective winding parts; and

Fig.13 is a diagram showing a configuration related to a connection between a first winding, a second winding and the axial winding.

[Description of Embodiments]

Hereinafter, with reference to the drawings, one embodiment in which a rotary electric machine of the present disclosure is embodied will be described. The rotary electric machine is used as a driving source of travelling in electric vehicles such as electric cars and hybrid vehicles.

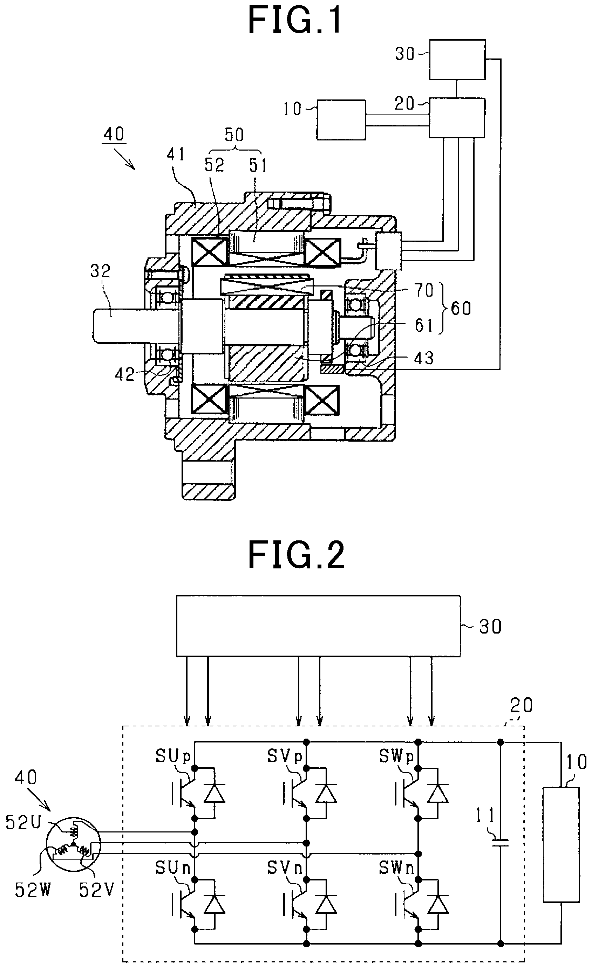

Firstly, with reference to Fig.1, a control system provided with a rotary electric machine will be described. The control system is provided with a DC power source 10, an inverter 20, a control apparatus 30 and a rotary electric machine 40. The rotary electric machine 40 is a field-winding type synchronous machine. For example, the rotary electric machine 40, the inverter 20 and the control apparatus 30 may be configured of an electrically and mechanically integrated driving apparatus. Alternatively, the rotary electric machine 40, the inverter 20 and the control apparatus 30 are configured as respective components.

The rotary electric machine 40 is provided with a housing 41, a stator 50 and a rotor 60 accommodated in the housing 41. The rotary electric machine 40 serves as an inner rotor type rotary electric machine in which the rotor 60 is disposed in an radially inside portion of the stator 50. The stator 50 is provided with a stator core 51 and a stator winding 52. The stator winding 52 is formed of a copper wire, including U,V,W wirings 52U, 52V, 52W arranged at 120° electrical angle relative to each other. The rotor 60 is provided with a rotor core 61 and a field winding 70. A rotary shaft 32 is mounted to a center hole of the rotor core 61. The rotary shaft 32 is rotatably supported to the housing 41 with bearings 42 and 43.

As shown in Fig.2, the inverter 20 is provided with series-connected bodies for U, V, W phases configured of upper arm switches SUp, SVp, SWp and lower arm switches SUn, SVn, SWn. In each phase, at connection point between the upper arm switches SUp, SVp, SWp and the lower arm switches SUn, SVn, SWn, the first ends of the U,V,W phase wirings 52U, 52V, 52W are connected. The second ends of the U,V,W phase windings 52U, 52V, 52W are connected at the neutral point. That is, according to the present embodiment, the stator winding 52 is connected as a star-connection. The stator winding 52 may be connected as a △ connection. According to the present embodiment, respective switches SUp-SWn are IGBTs. For the respective switches SUp-SWn, free wheel diodes are reversely connected in parallel.

At the collectors of the upper arm switches SUp, SVp, SWp in respective phases, the positive terminal of the DC power source is connected. At the emitters of the lower arm switches SUn, SVn, SWn in respective phases, the negative terminal of the DC power source is connected. Note that a smoothing capacitor 11 is connected parallel to the DC power source 10.

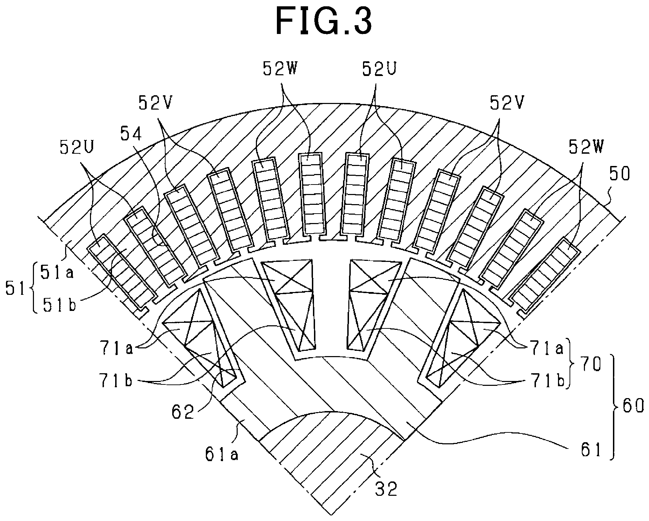

Subsequently, with reference to Fig.3, a stator 50 and a rotor 60 will be described.

The stator 50 and the rotor 60 are arranged coaxially with the rotary shaft 32. In the following description, a direction where the rotary shaft 32 extends is defined as an axial direction, a direction radially extending from the center of the rotary shaft 32 is defined as a radial direction, and a direction circumferentially extending with respect to the rotary shaft 32 as the center thereof is defined as a circumferential direction.

The stator core 51 is configured of a laminated steel plate made of soft magnetic material, including a back yoke 51a having an annular shape, a plurality of teeth 51b protruding towards radially inside part from the back yoke 51a. A plurality of slots 54 arranged in the circumferential direction are formed between adjacently positioned teeth 51b. The phase windings of respective phases are accommodated in respective slots 54 in a predetermined order, thereby forming the stator winding 52. For example, a segment coil structure using a plurality of conductor segments may be applied to the stator 50. Note that the stator winding 52 may be arbitrarily structured.

The rotor core 61 is configured of, for example, a laminated steel plate made of soft magnetic material. The rotor core 61 includes a cylindrical part 61a having a cylindrical shape and a plurality of main pole parts 62 protruding radially outward from the cylindrical part 61a. A field winding 70 is wound around the main pole parts 62 using a concentration winding. According to the present embodiment, eight main pole parts 62 are arranged in the circumferential direction at the same intervals.

The field winding 70 is provided with a first winding part 71a and a second winding part 71b. In the respective main pole parts 62, the first winding part 71a is wound therearound in the radially outside part and the second winding part 71b is wound therearound in the radially inside part relative to the first winding part 71a. For the relationship with the stator 50, the first winding 71a is wound around a part close to the stator 50, and the second winding part 71b is wound around a part apart from the stator 50 in the radial direction. In the respective main pole parts 62, winding directions of the first winding part 71a and the second winding part 71b are mutually the same. Among adjacently positioned main pole parts 62 in the circumferential direction, a winding direction of respective winding parts 71a, 71b wound around one main pole part 62 and a winding direction of respective winding parts 71a, 71b wound around the other main pole part 62 are opposite to each other. Hence, directions of magnetization are mutually opposite between adjacently positioned main pole parts 62 in the circumferential direction. In the rotor 60, a plurality of magnetic poles (field pole) arranged in the circumferential direction is formed by the respective main pole parts 62 in the rotor core 61 and the field winding 70 wound around the respective main pole parts 62.

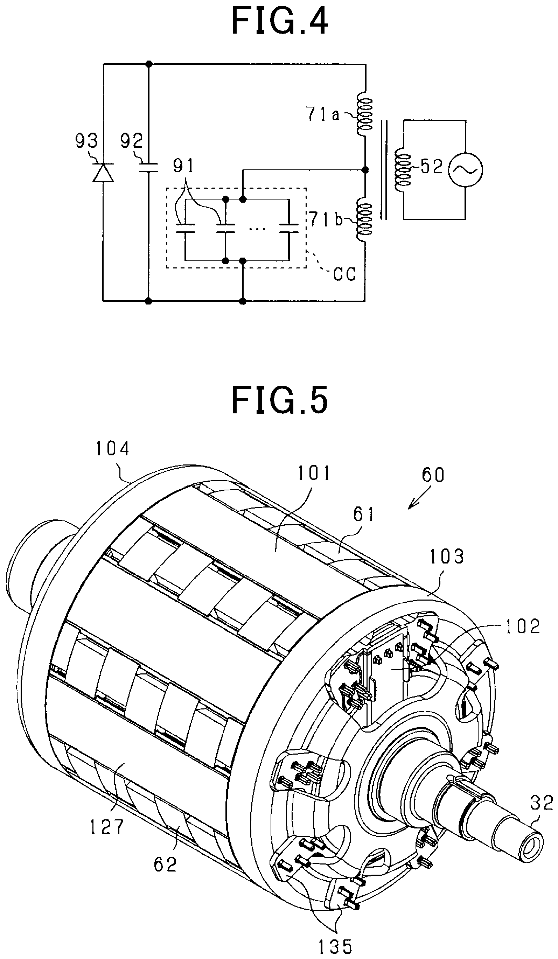

Fig.4 illustrates an electrical circuit in a rotor 60 side provided with respective winding parts 71a, 71b wound around the main pole part 62. The first winding part 71a and the second winding part 71b are connected in series, and a capacitor part CC configured of a plurality of first capacitors 91 are connected to the second winding part 71b. The capacitor CC is configured as a parallel-connected body of a plurality of first capacitors 91. Further, a second capacitor 92 is connected in parallel to the series-connected body of the first wiring part 71a and the second wiring part 71b. The second capacitor 92 is provided for suppressing noise. The first capacitor 91 and the second capacitor 92 are for example, laminated ceramic capacitors, having the same configuration.

A diode 93 as a rectifier is connected between both ends of the series-connected body configured of respective winding parts 71a, 71b. That is, the first end of the first winding part 71a is connected to the cathode of the diode 93, the first end of the second winding part 71b is connected to the second end of the first winding part 71a. An anode of the diode 93 is connected to the second end of the second winding part 71b.

According to the present embodiment, the first winding part 71a, the first capacitor 91 and the diode 93 constitute a series resonance circuit, and the second winding part 71b and the first capacitor 91 constitute a parallel resonance circuit. In this case, the first winding part 71a is connected in series to the first capacitor 91, and the second winding part 71b is connected in parallel to the first capacitor 91. Assuming that the first resonance frequency as a resonance frequency of the series resonance circuit is defined as f1, the second resonance frequency as a resonance frequency of the parallel resonance circuit is defined as f2, these respective resonance frequencies f1 and f2 are expressed by the following equations (1) and (2). L1 refers to an inductance of the first winding part 71a and L2 refers to an inductance of the second winding part 71b and C refers to an electrostatic capacitance of the first capacitor 91.

$$f1=1/(2\pi\sqrt{(L1\times C)}) \ldots (1)$$

$$f2=1/(2\pi\sqrt{(L2\times C)}) \ldots (2)$$

When a high frequency excitation current flows through the stator winding 52, main magnetic flux varies in the magnetic circuit including the stator core 51 and the rotor core 61 due to a high frequency component.

In the case where variation of main magnetic flux occurs, induced voltage is produced at the respective winding parts 71a, 71b, and current is induced at the respective winding parts 71a, 71b. At this moment, when induced voltages having the same polarity are produced at respective winding parts 71a, 71b, since induced current at the respective winding parts 71a, 71b are not cancelled, induced current increases. With the diode 93, current flowing through the respective winding parts 71a, 71b is rectified in one direction (rectified direction). Thus, the field current flows through the field winding 70 in the rectified direction with the diode 93, whereby the field winding 70 is excited.

Referring back to explanation of Fig.2, the control apparatus 30 is mainly configured of a microprocessor (corresponding to a computer), and the microprocessor includes a CPU. The control apparatus 30 is configured to generate a drive signal that changes respective switches SUp-SWn constituting the inverter 20 to be ON and OFF. Specifically, the control apparatus 30 generates drive signals for switching respective switches SUp-SWn to be ON and OFF and supplies the produced drive signals to gates of the respective switches SUp-SWn for converting the DC power outputted from the DC power source 10 to AC power to supply the converted AC power to the U,V,W phase windings 52U,52V and 52W.

The control apparatus 30 changes the respective switches Sup-SWn to be ON and OFF so as to allow a synthetic current of fundamental wave current and high frequency excitation current to flow to the respective phase windings 52U,52V and 52W. The fundamental wave current refers to a current mainly for causing the rotary electric machine 40 to generate torque. The high frequency excitation current refers to a high frequency current having a frequency higher than that of the fundamental wave current, and serves as a current mainly for causing the field winding 70 to be excited. Also, a higher harmonic component current may be used for the high frequency wave current. The phase current flowing through the respective phase windings 52U,52V and 52W are shifted by 120° of electrical angle with each other.

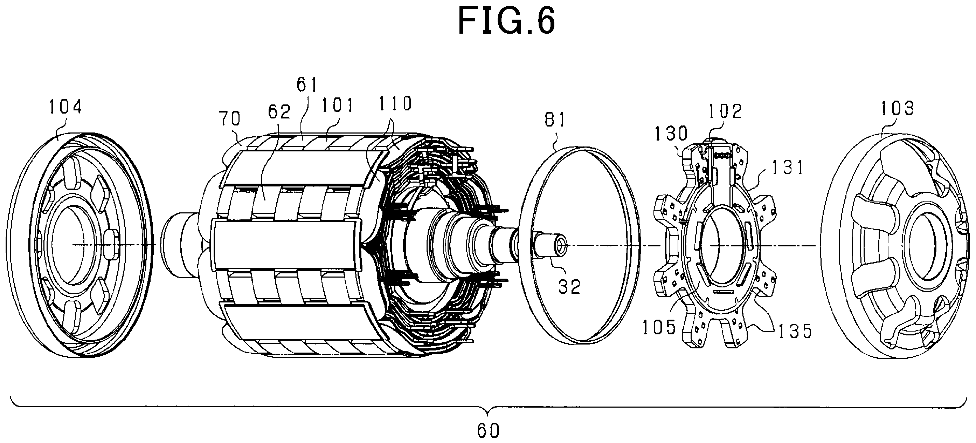

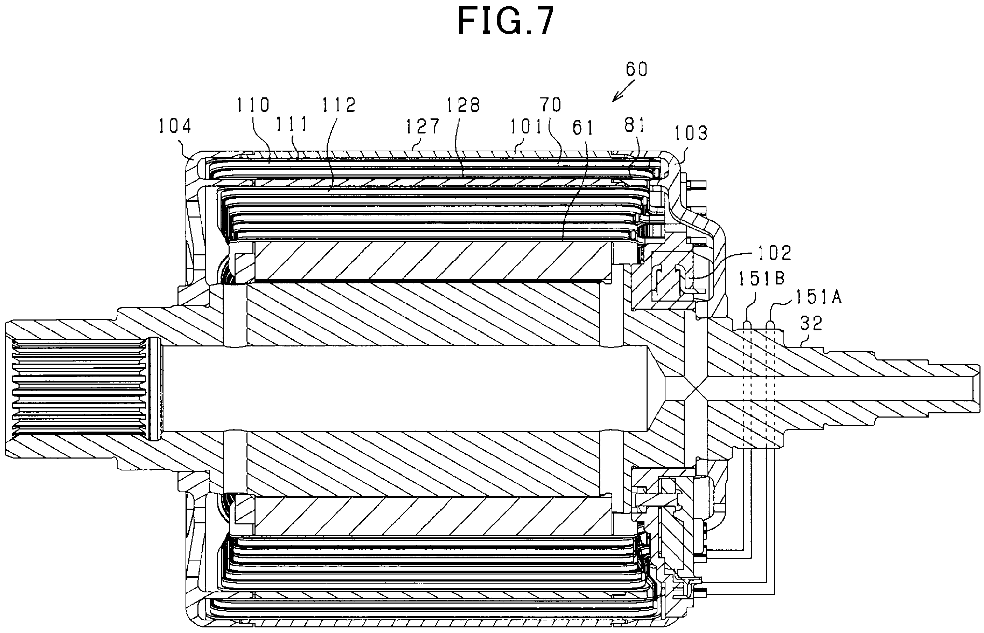

Next, a configuration of the rotor 60 will be described in more detail. Fig.5 is perspective view diagram showing an overall configuration of the rotor 60. Fig.6 is an exploded view diagram of the rotor 60 and Fig.7 is a vertical cross-sectional view of the rotor 60.

The rotor 60 includes a rotor main part 101, a circuit module 102 provided at one end in both axial ends of the rotor main part 101 and coil end covers 103, 104 as annular members mounted to the axial one end and the other axial end of the rotor main part 101. The rotor main part 101 is provided with the rotor core 61 and the field winding 70 as described in the explanation with reference to Fig.3. A rotary shaft 32 is assembled to a center hole of the rotor core 61. The field winding 70 is configured of a plurality of winding units 110 arranged in the circumferential direction.

The circuit module 102 is fixed to the rotary shaft 32 in a state where the rotary shaft 32 is inserted into a hollow part. The circuit module 102 is provided at a portion opposite to the coil end part of the field winding 70 in the axial direction. The circuit module 102 serves as an electrical circuit part provided with respective capacitors 91, 92, the diode 93 described in Fig.4 and a busbar electrically connecting these elements.

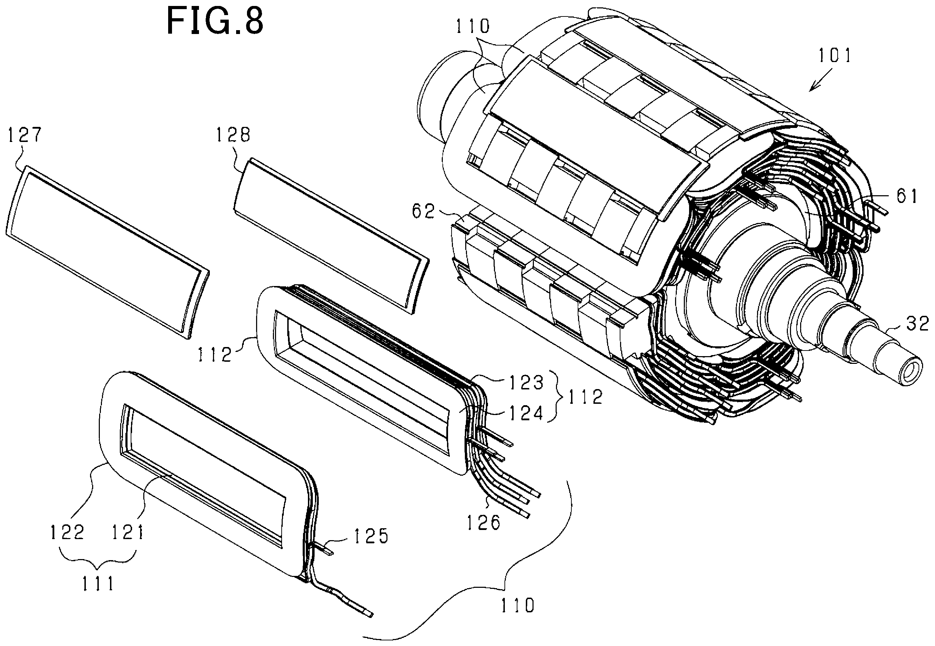

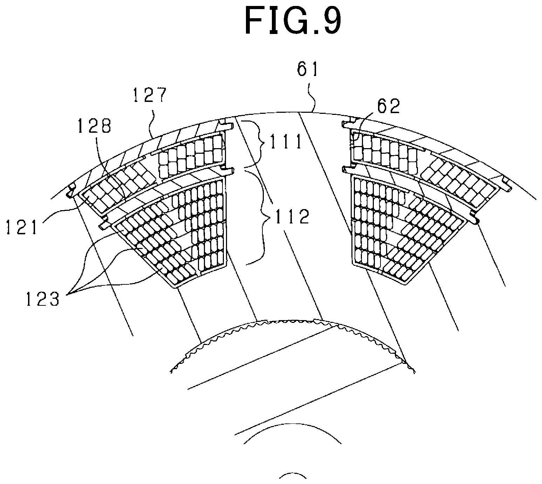

Fig.8 is a perspective view diagram showing a winding unit 110 which is disassembled in the rotor main part 101. Fig.9 is a lateral cross-sectional view showing a cross-sectional structure of a part of the rotor main part 101. The rotor main part 101 includes a plurality of winding units 110 provided at each magnetic pole of the rotor 60. The respective winding units 110 are formed in an annular shape of which the axial direction is a longitudinal direction thereof, and assembled to the rotor core 61 in a state where the main pole part 62 of the rotor core 61 is inserted into the hollow part.

The winding unit 110 includes, in state of being mounted to the main pole part 62, a first coil module 111 positioned in a radially outside and a second coil module 112 positioned in a radially inside. The first coil module 111 serves as a coil module corresponding to the first winding part 71a and the second coil module 112 serves as a coil module corresponding to the second wiring unit 71b.

The first coil module 111 includes an annular coil body 121 in which a conductor configured of a flat wire is multiply wound around the rotor 60 in the circumferential direction and the radial direction, and a thin-plate shaped insulator 122 integrated to the coil body 121. The insulator 122 includes a part that extends in the circumferential direction and covers a radially outside portion and a radially inside portion of the coil body 121, and a part that extends in the radial direction and covers a hollow part of the coil body 121. That is, for the coil body 121, portions in the radially inside and outside and an inner periphery side portion opposite to the main pole part 62 are covered by the insulator 122 as an insulation coating.

The second coil module 112 includes an annular coil body 123 in which a conductor configured of a flat wire is multiply wound around the rotor 60 in the circumferential direction and the radial direction, and a thin-plate shaped insulator 124 integrated to the coil body 123. The insulator 124 includes a part that extends in the circumferential direction and covers a radially outside portion and a radially inside portion of the coil body 123, and a part that extends in the radial direction and covers a hollow part of the coil body 123. That is, for the coil body 123, portions in the radially inside and outside and an inner periphery side portion opposite to the main pole part 62 are covered by the insulator 124 as an insulation coating.

The coil bodies 121 and 123 are configured as an α-winding coil for example, serving as an air-core coil in which the conductor is wound therearound to be overlapped in a direction where winding is overlapped (i.e. rotor circumferential direction) and the conductors are configured as two layers in a direction where the hollow part extends (i.e. rotor radial direction). According to the present embodiment, as a conductor of the coil bodies 121 and 123, a flat conducting wire formed in a rectangular in its cross-section having a longitudinal edge and a short side edge is utilized. The coil bodies 121 and 123 are wound therearound in a direction where the longitudinal edges are overlapped due to overlapping of the conductor. The flat wire is configured of a conductor made of aluminum or the like and an insulation layer that covers the conductor.

In the first coil module 111, two conductor end parts 125 are drawn from one coil body 121 and extended in the axial direction. In the second coil module 112, six conductor end parts 126 are drawn from three coil bodies 123 arranged in the radial direction and extended in the axial direction.

As shown in Fig.9, in the first coil module 111, conductors are wound therearound to be overlapped in two layers in the radial direction, and in the coil module 112, conductors are wound therearound to be overlapped in six layers in the radial direction. For the coil bodies 121 and 123, in the first coil module 111, one coil body 121 is provided in the radial direction, and in the second coil module 112, three coil bodies 123 are arranged in the radial direction. In this case, the number of windings of the second winding part 71b in the respective main pole parts 62 is larger than that of the first winding part 71a. In the respective coil modules 111 and 112, the number of windings in the circumferential direction (that is, the number of arrangements of the conductors in the circumferential direction) are different between the coil modules 111 and 112 such that the number of windings in the radially outside potion is larger than that of the radially inside portion. Thus, the space factor of the field winding 70 is improved.

Further, in a state where the first coil module 111 and the second coil module 112 are assembled to the respective main poles 62 (assembled state), supporting plates 127 and 128 are provided at a portion between main pole parts 62 of the rotor core 61 in the rotor main part 101 for supporting the assembled state of the first coil module 111 and the second coil module 112. The supporting plate 127 is mounted to a portion in a radially outside of the coil module 111, and the supporting plate 128 is mounted to a portion between the first coil module 111 and the second coil module 112.

As shown in Fig.6, the rotor 60 includes a coil end ring 81 to be assembled to one end (axial end) of the winding unit 110 in the axial direction. As shown in Fig.7, the coil end ring 81 is provided between a coil end part of the first coil module 111 and a coil end part of the second coil module 112 in the radial direction, being positioned between the supporting plate 128 and the coil end cover 103 in the axial direction.

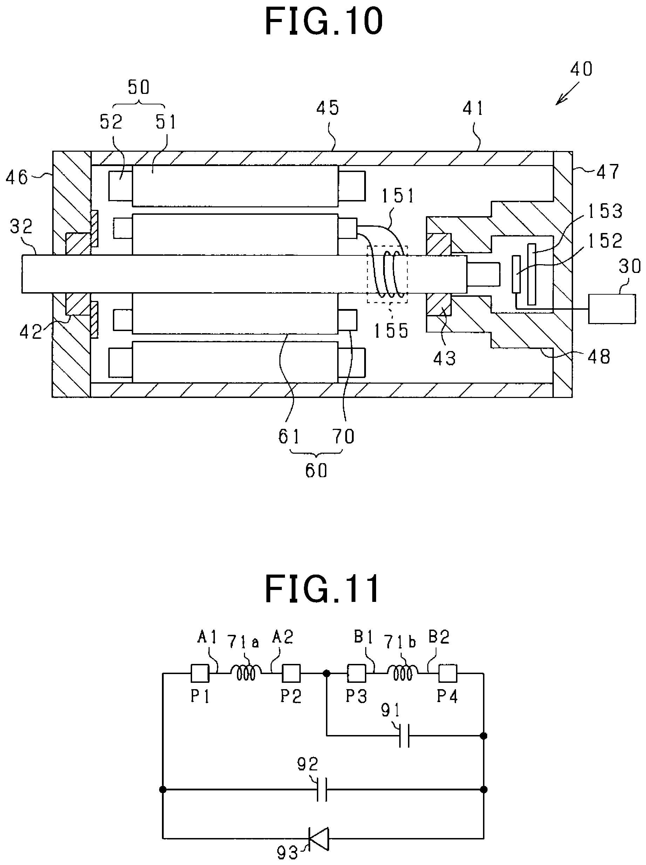

According to the present embodiment, in a field-winding type rotary electric machine 40, a configuration is provided in which magnetic flux is produced at the rotary shaft 32 by energizing the field winding 70, and the produced magnetic flux is detected. Hereinafter, the above-mentioned configuration will be described. Fig.10 is a diagram showing a vertical cross-section in which a configuration of the rotary electric machine 40 is simply illustrated.

In Fig,10, the housing 41 includes a cylindrical part 45 and an end plate part 46, 47 provided at both axial ends of the cylindrical part 45. The stator 50 is fixed to an inner periphery side of the cylindrical part 45. In an axial one end side of the end plate 47, a boss part 48 having a cylindrical shape is provided. The bearing 42 is assembled to the end plate part 46, and the bearing 43 is assembled to the boss part 48 of the end plate part 47. The rotary shaft 32 is rotatably supported by the bearings 42 and 43. The rotary shaft 32 is made of ferromagnetic material such as iron and rotatably provided integrally with the rotor 60.

The bearings 42 and 43 may have a non-magnetic structure. For example, in the case where the bearings 42 and 43 are configured as rolling bearings, an outer wheel and an inner wheel as a bearing ring may be made of a non-magnetic stainless steel and a ball as a rolling element may be made of ceramics. Alternatively, the bearing ring and the rolling element may be made of ceramics. Moreover, resin-made bearings may be utilized.

A shaft winding 151 extending from the field winding 70 is wound around the rotary shaft 32. The axial winding 151 is connected in series to the field winding 70, and energized by a field current flowing through the field winding 70. According to the present embodiment, as an axial winding 151, a first axial winding 151A is provided in a series-resonance circuit including the first winding part 71a, and a second axial winding 151B is provided in a parallel resonance circuit including the second winding part 71b. However, detailed configuration thereof will be described later.

In the boss part 48 of the end plate part 47, a magnetic sensor 152 as a magnetic flux detection part and a magnetism collection plate 153 as a magnetism collection part are arranged in a direction where the axial line of the rotary shaft 32 linearly extends. The magnetic sensor 152 is positioned apart from the rotary shaft 32 and positioned at a portion opposing to the axial end face of the rotary shaft 32. The magnetic sensor 152 is a Hall sensor for example. The magnetism collection plate 153 is provided in an opposite side of the rotary shaft 32 via the magnetic sensor 152. The rotary shaft 32, the magnetic sensor 152 and the magnetism collection plate 153 are provided at positions in the axial line direction of the rotary shaft 32 to be apart from each other with gaps therebetween. The magnetic sensor 152 and the magnetism collection plate 153 may be fixed to an inner periphery side of the boss part 48.

In the rotary electric machine 40, when a field current (induced current) flows through the field winding 70 due to energization of the stator winding 52, a field current also flows through the axial winding 151 to generate a magnetic flux at the rotary shaft 32. Then, the magnetic flux produced at the rotary shaft 32 is detected by the magnetic sensor 152. In this case, the magnetism collection plate 153 is provided in an opposite side of the rotary shaft 32 via the magnetic sensor 152, whereby a magnetic flux flowing from the axial end face of the rotary shaft 32 is concentrated in the vicinity of the magnetic sensor 152 and the magnetic flux produced by the field current is appropriately detected.

The detection result of the magnetic sensor 152 is transmitted to the control apparatus 30. The control apparatus 30 multiplies the magnetic detection value of the magnetic sensor 152 by a proportional coefficient, thereby estimating field current. In this case, for the proportional coefficient, a relationship between the field current and an amount of magnetic flux produced at the rotary shaft 32 may be acquired by a matching process or the like in advance in the rotary electric machine 40, thereby setting the proportional coefficient based on the acquired relationship. Moreover, a relationship between the field current and an amount of magnetic flux may be defined in a map in advance, and the map may be utilized, whereby the field current is estimated based on the amount of magnetic flux detected by the magnetic sensor 152.

The control apparatus 30 sets a target value of the field current for example, and performs a feedback control based on the target value and an estimation value (actual field current) of the field current. Further, the control apparatus 30 may perform, based on the estimation value of the field current, an abnormality determination to determine whether the field current appropriately flows through the field winding 70.

Fig.11 is an electrical circuit diagram showing a connection location of the axial winding 151 in the resonance circuit provided at the rotor 60. In Fig.11, one end of the first winding part 71a is referred to as a first end A1, the other end of the first winding part 71a is referred to as a second end A2, one end of the second winding part 71b is referred to as a first end B1, the other end of the second winding part 71b is referred to as a second end B2. Then, the second end A2 of the first winding part 71a and the first end B1 of the second winding part 71b are electrically connected, whereby these winding parts 71a and 71b are connected in series.

In Fig.11, in the series resonance circuit including the first winding part 71a, the first capacitor 91 and the diode 93, the first axial winding 151A is connected in series to the first winding part 71a at a position P1 in a first end A1 side of the first winding part 71a or a position P2 in a second end A2 side of the first winding part 71a. Also, in the parallel resonance circuit including the second winding part 71b and the first capacitor 91, the second axial winding 151B is connected in series to the second winding part 71b at a position P3 in the first end B1 side of the second winding part 71b or a position P4 in the second end B2 side of the second winding part 71b.

According to a configuration in which the first axial winding 151A is connected in series to the first winding part 71a, and the second axial winding 151B is connected in series to the second winding part 71b, as shown in Fig.7, the first axial winding 151A and the second axial winding 151B may be arranged at the rotary shaft 32 in the axial direction. Moreover, the winding ratio between the first axial winding 151A and the second axial winding 151B may be the same as the winding ratio between the first winding part 71a and the second winding parr 71b. According to the present embodiment, since the number of windings of the second winding part 71b is larger than the number of windings of the first winding part 71a, the number of windings of the second axial windings 151B is larger than the number of windings of the first axial winding 151A.

In this case, the total amount of magnetic flux produced at the first axial winding 151A and the second axial winding 151B has a proportional relationship with an amount of magnetic flux (an amount of field magnetic flux of the rotor 60) corresponding to a torque produced at the first winding part 71a and the second winding part 71b. Hence, a proportionality coefficient may be acquired in accordance with a proportional relationship between the total amount of magnetic flux of respective axial windings 151A and 151B and an amount of field magnetic flux of the rotor 60. In the control apparatus 30, the detection value of the magnetic flux of the magnetic sensor 152 may be multiplied by the proportional coefficient to calculate an amount of field magnetic flux. Then, a torque may be estimated using the calculated amount of filed magnetic flux.

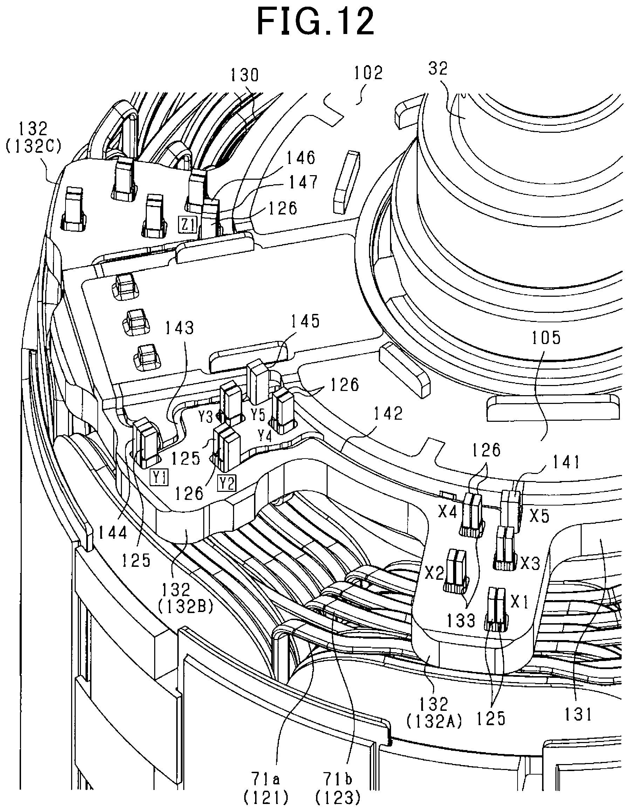

Here, specific connection structure of the axial winding 151 in the rotor 60 will be described. Fig.12 is a diagram showing a perspective view illustrating a configuration related to a connection of the coil bodies 121 and 123 in the respective winding parts 71a and 71b. Fig.12 states that the circuit module 102 is assembled in an axial one side of the rotor main part 101. In Fig.12, a configuration related to the axial winding 151 is omitted.

The circuit module 102 is provided with a component holder 130 that supports the above-described capacitors 91 and 92, the diode 93 and the like. The component holder 130 is configured of a material having electrical insulation properties such as synthetic resin. The component holder 130 is provided with a body part 131 having s annular shape and a plurality of conductor supporting part 132 radially extending towards radially outside from the body part 131. In Fig.12, the respective capacitors 91 and 92 and the diode 93 are arranged at a portion having a toric shape surrounding the rotary shaft 32, which are not illustrated since a resin molding part 105 covers them.

The component holder 130 is provided with the conductor supporting part 132 as many as the main pole parts 62 (8 parts). For the respective conductor supporting parts 132, a plurality of insertion holes 133 penetrating therethrough in the axial direction are formed. For each of the insertion holes 133, conductor end parts 125, 126 extending from the coil bodies 121, 123 of the respective winding parts 71a, 71b and the bus bar are inserted therethrough with a predetermined combination, and parts inserted into the same insertion hole 133 are bonded by a welding. Note that the conductor end parts 125, 126 may be fixed to the conductor supporting parts 132 in a state of being inserted into the insertion hole 133.

Among 8 conductor supporting parts 132, 3 conductor supporting parts 132A, 132B and 132C shown in Fig.12 will be described in detail.

The conductor supporting parts 132A, coil bodies positioned in the same column among 4 columns of coil bodies 121, 123 arranged in the radial direction are connected. Specifically, according to the conductor supporting part 132A, in the connection part X1, conductor end parts 125 of adjacently positioned coil bodies 121 in the circumferential direction are inserted into an insertion hole 133 and the inserted conductor end parts 125 are connected. Further, in the connection parts X2 to X4, conductor end parts 126 of adjacently positioned coil bodies 123 in the circumferential direction are inserted into the insertion hole 133 and the inserted conductor end parts 126 are connected. In the connection part X5, bus bars 141, 142 are connected thereto for connecting with the first capacitor 91.

Moreover, in the conductor supporting part 132B, coil bodies positioned in different columns are connected (lane-change connection) at respective coil bodies 121, 123, and respective capacitors 91, 92 and the diode 93 are connected via the bus bar. Specifically, according to the conductor supporting part 132B, in the connection part Y1, the conductor end part 125 of the coil body 121 of the first winding part 71a, one end part of the bus bar 143 used for connecting the second capacitor 92 and an end part of the bus bar 144 used for connecting the cathode of the diode 93 are connected. The connection in the connection part Y1 corresponds to a connection of the first winding part 71a in the first end A1 side in a state where the axial winding 151 is not connected in a circuit diagram shown in Fig.11.

Moreover, at the connection part Y2, the conductor end part 125 of the coil body 121 of the first winding part 71a, the conductor end part 126 of the coil body 123 of the second winding part 71b, and the end part of the bus bar 142 for connecting the first capacitor 91 are connected. The connection of the connection part Y2 corresponds to a connection between the second end A2 of the first winding part 71a and the first end B1 of the second winding part 71b in a state where the axial winding 151 is not connected in a circuit diagram shown in Fig.11. In the connection parts Y3 and Y4, conductor end parts 126 of the coil bodies 123 in different columns are connected. The bus bars 143 and 145 are connected to the connection part Y5 for connecting the second capacitor 92.

In the conductor supporting part 132C, the conductor end part 126 of the coil body 123 in the second winding part 71b, end part of the bus bar 146 of the respective capacitors 91, 92, and an end part of the bus bar 147 for connecting the anode are connected to the connection part Z1. The connection to the connection part Z1 corresponds to a connection of the second winding part 71b in the second end B2 side in a state where the axial winding 151 is not connected in a circuit diagram shown in Fig.11.

The respective winding parts 71a, 71b are configured such that respective coil bodies 121, 123 in each main pole part 62 are connected in the circumferential direction. For the first winding part 71a, the conductor end parts 125 at both ends of the series-connected body composed of a plurality of coil bodies 121 are the first end A1 and the second end A2. Further, for the second winding part 71b, the conductor end parts 126 at both ends of the series-connected body composed of a plurality of coil bodies 123 are the first end B1 and the second end B2. According to the present embodiment, in a state where the conductor end part 125 as the first end A1 and the second end A2 of the first winding part 71a and the conductor end part 126 as the first end B1 and the second end B2 of the second winding part 71b are inserted into the insertion hole 133 to be fixed, the axial windings 151A and 151B are electrically connected to any of the conductor end parts 125 and 126.

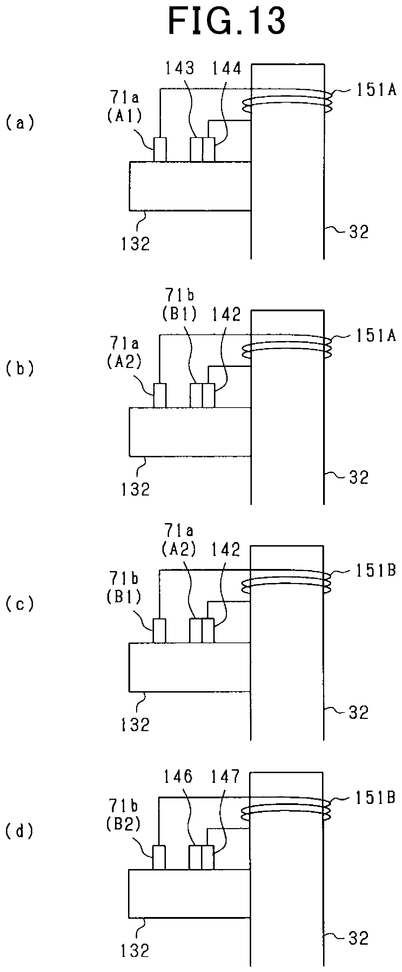

Fig.13 is a diagram showing a configuration related to a connection between both ends A1, A2 of the first winding part 71a and both ends B1, B2 of the second winding 71b, and the axial windings 151A, 151B in the conductor supporting part 132 of the circuit module 102.

A configuration (a) shown in Fig.13 illustrates a case where the first axial winding 151A is connected to the first end A1 (P1 in Fig.11) of the first winding part 71a. In this case, the first axial winding 151A is connected to a portion between the first end A1 of the first winding part 71a, and the bus bar 143 for the second capacitor 92 and the bus bar 144 for the diode 93. Referring to Fig.12, in the connection part Y1, the conductor end part 125 of the first winding part 71a and the bus bars 143, 144 are supported by mutually different insertion holes 133 of the conductor supporting part 132, and the first axial winding 151A is connected therebetween.

A configuration (b) shown in Fig.13 illustrates a case where the first axial winding 151A is connected to the second end A2 (P2 in Fig.11) of the first winding part 71a. In this case, the first axial winding 151A is connected to a portion between the second end A2 of the first winding part 71a, and the first end B1 of the second winding part 71b and the bus bar 142 of the first capacitor 91. Referring to Fig.12, in the connection part Y2, the conductor end part 125 of the first winding part 71a, the conductor end part 126 of the second winding part 71b and the bus bar 142 are supported by mutually different insertion holes 133 of the conductor supporting part 132, and the first axial winding 151A is connected therebetween.

A configuration (c) shown in Fig.13 illustrates a case where the second axial winding 151B is connected to the first end B1 (P3 in Fig.11) of the second winding part 71b. In this case, the second axial winding 151B is connected to a portion between the first end B1 of the second winding part 71b, and the second end A2 of the first winding part 71a and the bus bar 142 of the first capacitor 91. Referring to Fig.12, in the connection part Y2, the conductor end part 126 of the second winding part 71b, the conductor end part 125 of the first winding part 71a and the bus bar 142 are supported by mutually different insertion holes 133 of the conductor supporting part 132, and the second axial winding 151B is connected therebetween.

A configuration (d) shown in Fig.13 illustrates a case where the second axial winding 151B is connected to the second end B2 (P4 in Fig.11) of the second winding part 71b. In this case, the second axial winding 151B is connected to a portion between the second end B2 of the second winding part 71b, and the bus bar 146 of the respective capacitors 91 and 92 and the bus bar 147 of the diode 93. Referring to Fig.12, in the connection part Z1, the conductor end part 126 of the second winding part 71b, the bus bars 146, 147 are supported by mutually different insertion holes 133, and the second axial winding 151B is connected therebetween.

According to configurations (a) to (d) shown in Fig.13, the axial windings 151A and 151B are made of conductor material different from the respective winding parts 71a, 71b (coil bodies 121, 123) and may be connected to the conductor end parts 125, 126 of the respective winding parts 71a, 71b using welding or caulking.

According to the configurations (a) to (d) shown in Fig.13, respective axial windings 151A and 151B are connected to the conductor end parts 125, 126 in a state of being supported by the conductor supporting part 132 of the circuit module 102. In this case, the conductor end parts 125 and 126 are positionally aligned in the conductor supporting part 132 of the circuit module 102 to facilitate an operation of mounting the respective windings 151A, 151B.

For the rotor 60, either configurations (a) or (b) shown in Fig.13 is utilized such that the first axial winding 151A is connected in series to the first winding part 71a. Also, either configurations (c) or (d) shown in Fig.13 is utilized such that the second axial winding 151B is connected in series to the second winding part 71b. In the case where the configurations (b) and (c) shown in Fig.13 are combined, in the conductor supporting part 132, the conductor end part 125 (second end A2) of the first winding part 71a, the conductor end part 126 (first end B1) of the second winding part 71b and the bus bar 142 may be individually supported.

The first axial winding 151A and the second axial winding 151B are arranged on the rotary shaft 32 in the axial direction in a state of being connected to the end parts of the respective winding parts 71a, 71b and the end part of the bus bar (See Fig.7).

As shown in Fig.10, a resin sealing part 155 that resin-seals the axial winding 151 may be provided at the rotary shaft 32 in a state where the axial winding 151 is wound around the rotary shaft 32. According to a configuration in which the axial winding 151 is wound around the rotary shaft 32, the axial winding 151 rotates according to rotation of the rotary shaft 32. In this case, acceleration and deceleration of the rotation of the rotary shaft 32 may cause bending or positional shift of the axial winding 151. In this respect, since the axial winding 151 is sealed by the resin sealing part 155, the axial winding 151 can be prevented from being bent or positionally shifted.

According to the present embodiment described above in detail, the following effects advantages can be obtained.

In the rotor 60, the axial winding 151 connected in series to the field winding 70 is wound around the rotary shaft 32 made of ferromagnetic material, and the magnetic sensor 152 provided at an axial end of the rotary shaft 32 detects magnetic flux produced due to energization of the axial winding 151. In this case, an amount of magnetic flux produced by field current can be directly detected. As a result, an amount of magnetic flux produced depending on the field current can be appropriately detected and an amount of field current can be estimated.

In a direction where the axial line of the rotary shaft 32 linearly extends, the magnetism collection plate 153 is provided in an opposite side of the rotary shaft 32 via the magnetic sensor 152, collecting magnetic flux flowing out from an axial end face of the rotary shaft 32. With this configuration, even when ferromagnetic body is present in the vicinity of the axial end of the rotary shaft 32, causing a deviation of magnetic flux, magnetic flux flowing out from the axial end face of the rotary shaft 32 can be appropriately detected by the magnetic sensor 152, and an accuracy for estimating an amount of field current can be improved.

Assuming that components made of ferromagnetic material are present in the vicinity of the rotary electric machine 40, magnetic flux flowing out from the rotary shaft 32 is led to the ferromagnetic body and may cause an unintentional change in an amount of magnetic flux which passes through the magnetic sensor 152. In the case where the amount of magnetic flux changes, there is a concern that an estimation error of the current may occur. In this respect, since the magnetism collection plate 153 is provided, it is unlikely to be influenced from an ambient environment and the estimation accuracy for the current is improved.

In the rotary electric machine 40, the bearings 42 and 43 that rotatably supports the rotary shaft 32 is configured to have non-magnetic structure. Thus, compared to a case where bearings having magnetic structure is used, an amount of magnetic flux flowing out from the axial end face of the rotary shaft 32 detected by the magnetic sensor 152 can be larger and an estimation accuracy of magnetic flux can be improved.

In a series resonance circuit including the first winding part 71a, the first capacitor 91 and the diode 93, the first axial winding 151A is connected in series to the first winding part 71a at the first end side or the second end side of the first winding part 71a. Moreover, in a parallel resonance circuit including the second winding part 71b and the first capacitor 91, the second axial winding 151B is connected in series to the second winding part 71b at the first end side or the second end side of the second winding part 71b. Thus, in the case where the field current flows through the respective winding parts 71a, 71b in response to a conduction of high frequency current at the stator winding 52, a magnetic flux produced due to the field current at the respective winding parts 71a, 71b can be appropriately detected. In this case, an amount of field current that contributes to the torque generation of the rotary electric machine 40 can be determined. As a result, torque feedback control and the like of the rotary electric machine 40 can be appropriately performed.

The ratio of number of windings between the first axial winding 151A and the second axial winding 151B are set to be the same as the ratio of the number of windings between the first winding part 71a and the second winding part 71b. Thus, the total amount of magnetic flux produced at the respective axial windings 151A and 151B has a proportional relationship with an amount of field magnetic flux (an amount of magnetic flux that contributes the torque) of the rotor 60 produced by the respective winding parts 71a, 71b. Hence, the amount of field magnetic flux and the torque can readily be estimated.

The conductor ends 125, 126 of the respective winding parts 71, 71b are supported by the conductor supporting part 132 of the component holder 130 in the circuit module 102. Further, the first axial winding 151A is connected to the conductor end part 125 and the second axial winding 151B is connected to the conductor end part 126. In this case, connections of the respective axial windings 151A, 151B may be applied to the conductor end parts 125, 126 in a state of being supported by the conductor supporting part 132 of the circuit module 102. Hence, the axial windings 151 can readily and appropriately be fixed.

The resin-sealing part 155 that resin-seals the axial winding 151 (151A, 151B) wound around the rotary shaft 32. Thus, even when the rotation of the rotary shaft 32 accelerates or decelerates, the axial winding 151 can be prevented from being bent or positionally shifted.

(Other Embodiments)

The above-described embodiments may be modified in the following manners.

According to the above-described embodiments, as the axial winding 151, the first axial winding 151A connected in series to the first winding part 71a and the second axial winding part 151B connected in series to the second winding part 71b are provided. However, the above configuration may be modified. For example, either one of the first axial winding 151A or the second axial winding 151B may be provided.

With reference to Fig.11, the axial winding 151 is connected to either an end part A1 or an end part A2 of the first winding part 71a in the series resonance circuit including the first winding part 71a, and the axial winding 151 is not connected to the parallel resonance circuit including the second winding part 71b. According to this configuration, the magnetic sensor 152 detects a magnetic flux corresponding to an amount of current flowing through the first winding part 71a. In this case, for example, an abnormality of the diode 93 can be detected based on a detection value of the magnetic sensor 152.

Further, the axial winding 151 is connected to either an end part B1 or an end part B2 of the second winding part 71b in the parallel resonance circuit including the second winding part 71b, and the axial winding 151 is not connected to the series resonance circuit including the first winding part 71a. According to this configuration, the magnetic sensor 152 detects a magnetic flux corresponding to an amount of current flowing through the second winding part 71b. In this case, for example, an abnormality of the first capacitor 91 can be detected based on a detection value of the magnetic sensor 152.

According to the above-described embodiments, the respective winding parts 71a, 71b of the field winding 70 are configured as a series-connected body composed of a plurality of coil bodies 121, 123. However, this configuration may be modified in the following manners. For example, the respective winding parts 71a, 71b may be configured such that one conductor material is continuously wound around the respective main pole parts 62.

The axial windings 151A, 151B may be configured of a part of the conductor material being wound as the respective winding parts 71a, 71b. According to a configuration in which conductor material is continuously wound around the respective main pole parts 62 to form the respective winding parts 71a, 71b, since the conductor supporting part 132 of the circuit module 102 is not necessary, the axial windings 151A, 151B may be continuously wound from the respective winding parts 71a, 71b. In this case, in a configuration in which the respective winding parts 71a, 71b and the respective axial windings 151A, 151b are connected in series, a connection operation such as a welding or a caulking between the conductor end parts 125, 126 of the respective winding parts 71a, 71b and the axial windings 151A, 151B may be omitted.

In the rotor 60, the second winding part 71b may be disposed in a radially outside (stator 50 side) with respect to the first winding part 71a.

The field winding 70 of the rotor 60 may not be divided into the first winding part 71a and the second winding part 71b. Further, the resonance circuit may not include a parallel resonance circuit, but may be provided as a series-resonance circuit composed of the field winding 70, a capacitor and a diode.

In the stator 50, the stator core may not include teeth.

As a rotary electric machine, it is not limited to a rotary electric machine used as an on-vehicle main machine, but may be configured as a rotary electric machine used as an ISG (integrated starter generator) which is motor and generator, for example.

As a mobile body to which the rotary electric machine system is mounted, it is not limited to a vehicle, but may be an aircraft or ship, for example. Also, the rotary electric machine system is not limited to a system mounted to a mobile body, but may be configured as a stational system.

Technical ideas extracted from the above-described embodiments will be described in the following.

[Configuration 1]

A field winding type rotary electric machine (40) comprising:

a stator (50) having a stator winding (52);
a rotor (60) having a rotor core (61) including a main pole part (62) provided at each of magnetic poles arranged in a circumferential direction, protruding in a radial direction, and a field winding (70) wound around the main pole part; and
a rotary shaft (32) integrated with the rotor core, high frequency current flowing through the stator winding to induce a field current through the field winding, wherein
the rotary shaft is made of ferromagnetic material;
the field winding type rotary electric machine further comprising:

an axial winding (151) wound around the rotary shaft, being energized by the field current flowing through the field winding; and
a magnetic flux detecting part (152) provided at an axial end of the rotary shaft, detecting a magnetic flux produced when energizing the axial winding.

[Configuration 2]

The field winding type rotary electric machine according to configuration 1,
wherein
a magnetism collection part (153) is provided in an opposite side of the rotary shaft via the magnetic flux detecting part in a direction where an axial line of the rotary shaft linearly extends, collecting a magnetic flux flowing out from an axial end face of the rotary shaft.

[Configuration 3]

The field winding type rotary electric machine according to configuration 1 or 2,
wherein

the field winding includes a first winding part (71a) and a second winding part (71b);
among a first end and a second of the first winding part and a first end and a second end of the second winding part, the second end of the first winding part and the first end of the second winding part are electrically connected, whereby respective winding parts are connected in series;
a diode (93) is connected to both ends of a series-connected body of the first winding part and the second winding part, and a capacitor (91) is connected in parallel to the second winding part;
in a series resonance circuit including the first winding part, the capacitor and the diode, a first axial winding (151A) as the axial winding is connected in series to the first winding part at a first end side or a second end side of the first winding part; and
in a parallel resonance circuit including the second winding part and the capacitor, a second axial winding (151B) as the axial winding is connected in series to the second winding part at a first end side or a second end side of the second winding part.

[Configuration 4]

The field winding type rotary electric machine according to configuration 3,
wherein
a winding ratio between the first axial winding and the second axial winding is the same as a winding ratio between the first winding part and the second winding part.

[Configuration 5]

The field winding type rotary electric machine according to configuration 3 or 4,
wherein

the rotor includes a circuit module (102) that electrically connects the first winding part, the second winding part, the diode and the capacitor to constitute the series resonance circuit and the parallel resonance circuit;
the circuit module includes a conductor supporting part (132) that supports a conductor end part (125) in a first end side and a second end side of the first winding part, and supports a conductor end part (126) in a first end side and a second end side of the second winding part;
the first axial winding is connected to a conductor end part in a first end side or a second end side of the first winding part supported by the conductor supporting part; and
the second axial winding is connected to a conductor end part in a first end side or a second end side of the second winding part supported by the conductor supporting part.

[Configuration 6]

The field winding type rotary electric machine according to configuration 1 or 2,
wherein

the field winding has a first winding part (71a) and a second winding part (71b);
among a first end and a second of the first winding part and a first end and a second end of the second winding part, the second end of the first winding part and the first end of the second winding part are electrically connected, whereby respective winding parts are connected in series;
a diode (93) is connected between the first end of the first winding part and the second end of the second winding part, and a capacitor (91) is connected in parallel to the second winding part; and
in a series resonance circuit including the first winding part, the capacitor and the diode, the axial winding is connected in series to the first winding part at a first end side or a second end side of the first winding part.

[Configuration 7]

The field winding type rotary electric machine according to configuration 1 or 2,
wherein

the field winding has a first winding part (71a) and a second winding part (71b);
among a first end and a second of the first winding part and a first end and a second end of the second winding part, the second end of the first winding part and the first end of the second winding part are electrically connected, whereby respective winding parts are connected in series;
a diode (93) is connected between the first end of the first winding part and the second end of the second winding part, and a capacitor (91) is connected in parallel to the second winding part; and

in a parallel resonance circuit including the second winding part and the capacitor, the axial winding is connected in series to the second winding part at a first end side or a second end side of the second winding part.

[Configuration 8]

The field winding type rotary electric machine according to any one of configurations 1 to 7, wherein

a resin sealing part (155) that resin-seals the axial winding is provided at the rotary shaft in a state where the axial winding is wound

The present disclosure has been described in accordance with the embodiments. However, the present disclosure is not limited to the embodiments and structure thereof. The present disclosure includes various modification examples and modifications within the equivalent configurations. Further, various combinations and modes and other combinations and modes including one element or more or less elements of those various combinations are within the range and technical scope of the present disclosure.

**Claims**

1. A field winding type rotary electric machine (40) comprising:

    a stator (50) having a stator winding (52);
    a rotor (60) having a rotor core (61) including a main pole part (62) provided at each of magnetic poles arranged in a circumferential direction, protruding in a radial direction, and a field winding (70) wound around the main pole part; and
    a rotary shaft (32) integrated with the rotor core, high frequency current flowing through the stator winding to induce a field current through the field winding,
    wherein
    the rotary shaft is made of ferromagnetic material;
    the field winding type rotary electric machine further comprising:

        an axial winding (151) wound around the rotary shaft, being energized by the field current flowing through the field winding; and
        a magnetic flux detecting part (152) provided at an axial end of the rotary shaft, detecting a magnetic flux produced when energizing the axial winding.

2. The field winding type rotary electric machine according to claim 1, wherein
a magnetism collection part (153) is provided in an opposite side of the rotary shaft via the magnetic flux detecting part in a direction where an axial line of the rotary shaft linearly extends, collecting a magnetic flux flowing out from an axial end face of the rotary shaft.

3. The field winding type rotary electric machine according to claim 1 or 2, wherein

    the field winding includes a first winding part (71a) and a second winding part (71b);
    among a first end and a second of the first winding part and a first end and a second end of the second winding part, the second end of the first winding part and the first end of the second winding part are electrically connected, whereby respective winding parts are connected in series;
    a diode (93) is connected to both ends of a series-connected body of the first winding part and the second winding part, and a capacitor (91) is connected in parallel to the second winding part;
    in a series resonance circuit including the first winding part, the capacitor and the diode, a first axial winding (151A) as the axial winding is connected in series to the first winding part at a first end side or a second end side of the first winding part; and
    in a parallel resonance circuit including the second winding part and the capacitor, a second axial winding (151B) as the axial winding is connected in series to the second winding part at a first end side or a second end side of the second winding part.

4. The field winding type rotary electric machine according to claim 3, wherein
a winding ratio between the first axial winding and the second axial winding is the same as a winding ratio between the first winding part and the second winding part.

5. The field winding type rotary electric machine according to claim 3, wherein

    the rotor includes a circuit module (102) that electrically connects the first winding part, the second winding part, the diode and the capacitor to constitute the series resonance circuit and the parallel resonance circuit;
    the circuit module includes a conductor supporting part (132) that supports a conductor end part (125) in a first end side and a second end side of the first winding part, and supports a conductor end part (126) in a first end side and a second end side of the second winding part;

the first axial winding is connected to a conductor end part in a first end side or a second end side of the first winding part supported by the conductor supporting part; and

the second axial winding is connected to a conductor end part in a first end side or a second end side of the second winding part supported by the conductor supporting part.

6. The field winding type rotary electric machine according to claim 1 or 2,
wherein

the field winding has a first winding part (71a) and a second winding part (71b);

among a first end and a second of the first winding part and a first end and a second end of the second winding part, the second end of the first winding part and the first end of the second winding part are electrically connected, whereby respective winding parts are connected in series;

a diode (93) is connected between the first end of the first winding part and the second end of the second winding part, and a capacitor (91) is connected in parallel to the second winding part; and

in a series resonance circuit including the first winding part, the capacitor and the diode, the axial winding is connected in series to the first winding part at a first end side or a second end side of the first winding part.

7. The field winding type rotary electric machine according to claim 1 or 2,
wherein

the field winding has a first winding part (71a) and a second winding part (71b);

among a first end and a second of the first winding part and a first end and a second end of the second winding part, the second end of the first winding part and the first end of the second winding part are electrically connected, whereby respective winding parts are connected in series;

a diode (93) is connected between the first end of the first winding part and the second end of the second winding part, and a capacitor (91) is connected in parallel to the second winding part; and

in a parallel resonance circuit including the second winding part and the capacitor, the axial winding is connected in series to the second winding part at a first end side or a second end side of the second winding part.

8. The field winding type rotary electric machine according to claim 1 or 2,
wherein

a resin sealing part (155) that resin-seals the axial winding is provided at the rotary shaft in a state where the axial winding is wound around the rotary shaft.

# FIG.1

# FIG.2

# FIG.3

# FIG.4

# FIG.5

FIG.6

# FIG.7

EP 4 761 078 A1

# FIG.8

# FIG.9

# FIG.10

# FIG.11

# FIG.12

# FIG.13

(a)

143  144

71a
(A1)

151A

132

32

(b)

71b
(B1)  142

71a
(A2)

151A

132

32

(c)

71a
(A2)  142

71b
(B1)

151B

132

32

(d)

146  147

71b
(B2)

151B

132

32

## INTERNATIONAL SEARCH REPORT

| International application No. |
|---|
| **PCT/JP2024/025628** |

**A. CLASSIFICATION OF SUBJECT MATTER**

*H02K 19/36*(2006.01)i; *H02K 19/28*(2006.01)i
FI: H02K19/36 C; H02K19/28

According to International Patent Classification (IPC) or to both national classification and IPC

**B. FIELDS SEARCHED**

Minimum documentation searched (classification system followed by classification symbols)

H02K19/36; H02K19/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-124100 A (DENSO CORPORATION) 13 August 2020 (2020-08-13) paragraphs [0001]-[0080], fig. 1-19 | 1-8 |
| A | JP 2023-72759 A (MITSUBISHI ELECTRIC CORPORATION) 25 May 2023 (2023-05-25) paragraphs [0001]-[0053], fig. 1-8 | 1-8 |
| A | JP 2021-191100 A (MITSUBISHI ELECTRIC CORPORATION) 13 December 2021 (2021-12-13) paragraphs [0001]-[0053], fig. 1-8 | 1-8 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 September 2024** | **01 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/025628**

| Patent document cited in search report | | | Publication date (day/month/year) | Patent family member(s) | Publication date (day/month/year) |
|---|---|---|---|---|---|
| JP | 2020-124100 | A | 13 August 2020 | US 2020/0251940 A1 paragraphs [0001]-[0126], fig. 1-19 | |
| JP | 2023-72759 | A | 25 May 2023 | (Family: none) | |
| JP | 2021-191100 | A | 13 December 2021 | (Family: none) | |

Form PCT/ISA/210 (patent family annex) (July 2022)

**EP 4 761 078 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023129451 A
- JP H10309100 B